# EUROPEAN PATENT APPLICATION

(11) **EP 4 216 453 A1**
(43) Date of publication of application: **26.07.2023**
(21) Application number: 23162481.8
(22) Date of filing: 27.03.2020
(51) Int. Cl.: H04B 7/06, H04B 7/08

(54) **BEAM MANAGEMENT IN WIRELESS COMMUNICATION**

(62) Divisional of application: 20166468.7
(71) Applicant: Nokia Technologies Oy, 02610 Espoo (FI)
(72) Inventor: PARK, Dan, Yong-in City (KR); HAKOLA, Sami, 90450 Kempele (FI); ENESCU, Mihai, 02200 Espoo (FI); CAPORAL DEL BARRIO, Samantha, 9000 Aalborg (DK)
(74) Representative: Swindell & Pearson Limited

(57) **Abstract**

Certain examples of the present invention relate to beam management in wireless communication. Certain examples provide an apparatus 110, 1200 comprising:
means 1201 for determining whether at least one transmission power parameter for uplink transmission to a network node 120 via at least one respective candidate uplink beam would violate a maximum permissible exposure limit, the at least one candidate uplink beam and the at least one transmission power parameter being based, at least in part, on at least one respective measured candidate downlink beam; and
means for transmitting to the network node at least one indication as to whether the at least one measured candidate downlink beam is suitable for use in uplink communication (i.e. uplink reception and/or transmission, the at least one indication being based at least in part on the determination.

## Description

### TECHNOLOGICAL FIELD

Examples of the present disclosure relate to beam management in wireless communication.

### BACKGROUND

A wireless network comprises a plurality of nodes including terminal nodes (also referred to as User Equipment) and access nodes (also referred to as network nodes). The access nodes communicate with terminal nodes wirelessly with downlink transmissions via downlink beams. The terminal nodes communicate with access nodes wirelessly with uplink transmissions via uplink beams. Terminal nodes are capable of transmitting electromagnetic radiation at frequencies and power levels that could exceed recommended Maximum Permissible Exposure limits.

In some circumstances it may be desirable to provide improved beam management by reducing signalling overhead for beam management, and/or simplifying the beam selection for uplink communication, whilst avoiding uplink transmissions exceeding Maximum Permissible Exposure limits.

The listing or discussion of any prior-published document or any background in this specification should not necessarily be taken as an acknowledgement that the document or background is part of the state of the art or is common general knowledge. One or more aspects/examples of the present disclosure may or may not address one or more of the background issues.

### BRIEF SUMMARY

The scope of protection sought for various embodiments of the invention is set out by the independent claims. Any examples/embodiments and features described in this specification that do not fall under the scope of the independent claims are to be interpreted as examples useful for understanding various embodiments of the invention.

According to at least some examples of the disclosure there is provided an apparatus comprising:
means for determining whether at least one transmission power parameter for uplink transmission to a network node via at least one respective candidate uplink beam would violate a maximum permissible exposure limit, the at least one candidate uplink beam and the at least one transmission power parameter being based, at least in part, on at least one respective measured candidate downlink beam; and
means for transmitting to the network node at least one indication as to whether the at least one measured candidate downlink beam is suitable for use in uplink communication, the at least one indication being based at least in part on the determination.

According to various, but not necessarily all, examples of the disclosure there is provided a method comprising:
determining whether at least one transmission power parameter for uplink transmission to a network node via at least one respective candidate uplink beam would violate a maximum permissible exposure limit, the at least one candidate uplink beam and the at least one transmission power parameter being based, at least in part, on at least one respective measured candidate downlink beam; and
transmitting to the network node at least one indication as to whether the at least one measured candidate downlink beam is suitable for use in uplink communication, the at least one indication being based at least in part on the determination.

According to various, but not necessarily all, examples of the disclosure there is provided computer program instructions for causing an apparatus to perform:
determining whether at least one transmission power parameter for uplink transmission to a network node via at least one respective candidate uplink beam would violate a maximum permissible exposure limit, the at least one candidate uplink beam and the at least one transmission power parameter being based, at least in part, on at least one respective measured candidate downlink beam; and
transmitting to the network node at least one indication as to whether the at least one measured candidate downlink beam is suitable for use in uplink communication, the at least one indication being based at least in part on the determination.

According to various, but not necessarily all, examples of the disclosure there is provided a chipset comprising processing circuitry configured to perform the above-mentioned method.

According to various, but not necessarily all, examples of the disclosure there is provided a module, device and/or system comprising means for performing the above-mentioned method.

According to various, but not necessarily all, examples of the disclosure there is provided an apparatus comprising: at least one processor; and at least one memory including computer program instructions; the at least one memory and the computer program instructions configured to, with the at least one processor, cause the apparatus at least to perform:
determining whether at least one transmission power parameter for uplink transmission to a network node via at least one respective candidate uplink beam would violate a maximum permissible exposure limit, the at least one candidate uplink beam and the at least one transmission power parameter being based, at least in part, on at least one respective measured candidate downlink beam; and
transmitting to the network node at least one indication as to whether the at least one measured candidate downlink beam is suitable for use in uplink communication, the at least one indication being based at least in part on the determination.

According to various, but not necessarily all, examples of the disclosure there is provided a non-transitory computer readable medium encoded with instructions that, when performed by at least one processor, causes at least the following to be performed:
determining whether at least one transmission power parameter for uplink transmission to a network node via at least one respective candidate uplink beam would violate a maximum permissible exposure limit, the at least one candidate uplink beam and the at least one transmission power parameter being based, at least in part, on at least one respective measured candidate downlink beam; and
transmitting to the network node at least one indication as to whether the at least one measured candidate downlink beam is suitable for use in uplink communication, the at least one indication being based at least in part on the determination.

According to at least some examples of the disclosure there is provided an apparatus comprising:
means for receiving, from a user equipment, at least one indication as to whether at least one candidate downlink beam measured by the user equipment is suitable for use in uplink communication, wherein the indication is for indicating whether at least one transmission power parameter for uplink transmission from the user equipment via at least one respective candidate uplink beam would violate a maximum permissible exposure limit, the at least one candidate uplink beam and the at least one transmission power parameter being based, at least in part, on the at least one respective measured candidate downlink beam; and
means for selecting, based on the received indication, a measured candidate downlink beam for use in uplink communication.

According to various, but not necessarily all, examples of the disclosure there is provided a method comprising:
receiving, from a user equipment, at least one indication as to whether at least one candidate downlink beam measured by the user equipment is suitable for use in uplink communication, wherein the indication is for indicating whether at least one transmission power parameter for uplink transmission from the user equipment via at least one respective candidate uplink beam would violate a maximum permissible exposure limit, the at least one candidate uplink beam and the at least one transmission power parameter being based, at least in part, on the at least one respective measured candidate downlink beam; and selecting, based on the received indication, a measured candidate downlink beam for use in uplink communication.

According to various, but not necessarily all, examples of the disclosure there is provided computer program instructions for causing an apparatus to perform:
receiving, from a user equipment, at least one indication as to whether at least one candidate downlink beam measured by the user equipment is suitable for use in uplink communication, wherein the indication is for indicating whether at least one transmission power parameter for uplink transmission from the user equipment via at least one respective candidate uplink beam would violate a maximum permissible exposure limit, the at least one candidate uplink beam and the at least one transmission power parameter being based, at least in part, on the at least one respective measured candidate downlink beam; and selecting, based on the received indication, a measured candidate downlink beam for use in uplink communication.

According to various, but not necessarily all, examples of the disclosure there is provided an apparatus comprising: at least one processor; and at least one memory including computer program instructions; the at least one memory and the computer program instructions configured to, with the at least one processor, cause the apparatus at least to perform:
receiving, from a user equipment, at least one indication as to whether at least one candidate downlink beam measured by the user equipment is suitable for use in uplink communication, wherein the indication is for indicating whether at least one transmission power parameter for uplink transmission from the user equipment via at least one respective candidate uplink beam would violate a maximum permissible exposure limit, the at least one candidate uplink beam and the at least one transmission power parameter being based, at least in part, on the at least one respective measured candidate downlink beam; and selecting, based on the received indication, a measured candidate downlink beam for use in uplink communication.

According to various, but not necessarily all, examples of the disclosure there is provided a non-transitory computer readable medium encoded with instructions that, when performed by at least one processor, causes at least the following to be performed:
receiving, from a user equipment, at least one indication as to whether at least one candidate downlink beam measured by the user equipment is suitable for use in uplink communication, wherein the indication is for indicating whether at least one transmission power parameter for uplink transmission from the user equipment via at least one respective candidate uplink beam would violate a maximum permissible exposure limit, the at least one candidate uplink beam and the at least one transmission power parameter being based, at least in part, on the at least one respective measured candidate downlink beam; and selecting, based on the received indication, a measured candidate downlink beam for use in uplink communication.

According to various, but not necessarily all, examples of the disclosure there is provided a chipset comprising processing circuitry configured to perform the above-mentioned method.

According to various, but not necessarily all, examples of the disclosure there is provided a module, device and/or system comprising means for performing the above-mentioned method.

The following portion of this 'Brief Summary' section describes various optional features that can be features of any of the examples described in the foregoing portion of the 'Brief Summary' section; such features may be combined all or partly together.

In some but not necessarily all examples, the means for determining comprises means for estimating a target transmission power for uplink transmission to the network node via a candidate uplink transmission beam corresponding to a candidate downlink reception beam of the at least one measured candidate downlink beam.

In some but not necessarily all examples, the means for determining comprises means for determining a position of at least a part of a user's body with respect to a candidate uplink transmission beam, wherein the candidate uplink transmission beam corresponds to a candidate downlink reception beam of the at least one measured candidate downlink beam.

In some but not necessarily all examples, the means for determining further comprises:
means for determining a first group of one or more candidate uplink beams corresponding to a received first group of one or more measured candidate downlink beams;
means for determining a first group of one or more transmission power parameter values for the one or more candidate uplink beams of the first set;
means for determining a first group of one or more transmission power parameter thresholds for the one or more candidate uplink beams of the first set based on the maximum permissible exposure limit;
means for determining a second group of one or more candidate uplink beams, the second group of candidate uplink beams comprising one or more candidate uplink beams whose transmission power parameter values are greater than their respective transmission power parameter thresholds;
means for determining a second group of one or more measured candidate downlink beams corresponding to the one or more candidate uplink beams of the second group of candidate uplink beams; and wherein
the at least one indication comprises at least one indication as to whether the one or more measured candidate downlink beams of the second group measured candidate downlink beams is not suitable for use in uplink transmission.

In some but not necessarily all examples, the apparatus further comprises:
means for determining at least one power difference between the at least one transmission power parameter and at least one transmission power parameter threshold, wherein the at least one transmission power parameter threshold is based on the maximum permissible exposure limit; and
means for transmitting at least one signal indicative of the at least one power difference.

In some but not necessarily all examples, the apparatus further comprises:
means for receiving at least one signal indicative of at least one transmission power reduction parameter for uplink transmission to the network node via the at least one respective candidate uplink beam; and
means for determining the at least one transmission power parameter based at least in part on the at least one transmission power reduction parameter.

In some but not necessarily all examples, the apparatus further comprises means for transmitting at least one downlink beam report. In some but not necessarily all examples, the at least one indication is comprised in the at least one downlink beam report. In some but not necessarily all examples, the at least one downlink beam report precludes reporting measured candidate downlink beams not comprised in the second group of one or more measured candidate downlink beams.

In some but not necessarily all examples, the means for transmitting the at least one indication comprises means for transmitting the at least one indication separately to a transmission of a downlink beam report.

In some but not necessarily all examples, the at least one indication comprises at least one indication of at least one selected from the group of:
at least one notification of at least one beam group index;
at least one notification of at least one set of downlink reference signals; and
at least one notification of at least one antenna.

It is to be appreciated that the various examples of features and operations described above are not mutually exclusive to one another and may be combined in one or more combinations thereof.

It is to be appreciated that, while various examples of features and operations have been described above which may be provided or performed by an apparatus or a system, it will be appreciated that any one or more or all of these features and operations may be provided or performed in a corresponding method as appropriate.

According to various, but not necessarily all, examples of the disclosure there are provided examples as claimed in the appended claims.

### BRIEF DESCRIPTION OF THE DRAWINGS

For a better understanding of various examples of the present disclosure that are useful for understanding the detailed description and certain examples of the present disclosure, reference will now be made by way of example only to the accompanying drawings in which:
FIG. 1 schematically illustrates an example of a wireless communication network according to the present disclosure;
FIG. 2 schematically illustrates an example of beams of gNB's and a UE according to the present disclosure;
FIG. 3 schematically illustrates an example of a method according to the present disclosure;
FIG. 4 schematically illustrates an example of a further method according to the present disclosure;
FIG. 5 schematically illustrates an example of a yet further method according to the present disclosure;
FIG. 6 schematically illustrates an example of beams of a UE according to the present disclosure;
FIG. 7 schematically illustrates a further example of beams of a UE according to the present disclosure;
FIG. 8 schematically illustrates a yet further example of beams of a UE according to the present disclosure;
FIG. 9 schematically illustrates an example of a yet further method according to the present disclosure;
FIG. 10 schematically illustrates a yet further example of beams of a UE according to the present disclosure;
FIG. 11 schematically illustrates a yet further example of beams of a UE according to the present disclosure; and
FIG. 12 schematically illustrates an example of an apparatus according to the present disclosure.

The figures are not necessarily to scale. Certain features and views of the figures may be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

### DEFINITIONS

- CRI: CSI-RS Resource Indicator
- CSI-RS: Channel State Information Reference Signal
- cULb: Candidate Uplink Beam
- DL: Downlink
- MAC CE: Medium Access Control Control Element
- mcDLb: Measured Candidate Downlink Beam
- MPE: Maximum Permissible Exposure
- PDCCH: Physical Downlink Control Channel
- PUCCH: Physical Uplink Control Channel
- QCL: Quasi-colocation
- RSRP: Reference Signal Received Power
- Rx: Reception/Receive
- SSB: Synchronization Signal Block
- TDD: Time Division Duplexing
- TRP: Transmission Reception Point
- Tx: Transmission/Transmit
- TCI: Transmission Configuration Indicator
- UE: User Equipment
- UL: Uplink

### DETAILED DESCRIPTION

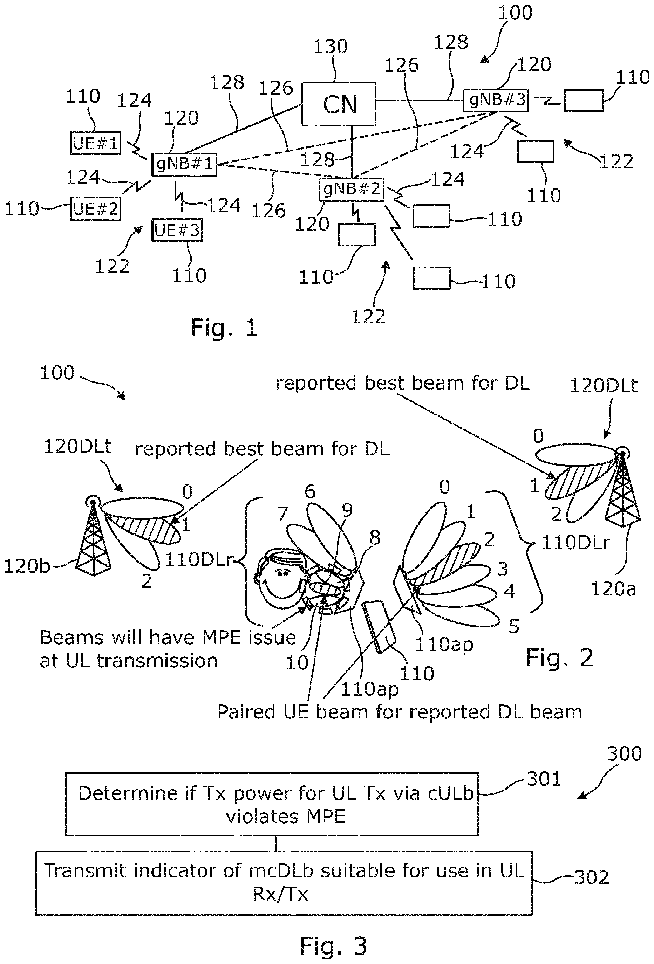

FIG.1 schematically illustrates an example of a network 100 comprising a plurality of network nodes including terminal nodes 110 (also referred to as User Equipment), access nodes 120 (also referred to as transmission reception points, base stations or gNB), and core network 130.

The terminal nodes 110 and access nodes 120 communicate with each other. The core network 130 communicates with the access nodes 120. One or more core nodes of the core network 130 may, in some but not necessarily all examples, communicate with each other. The one or more access nodes 120 may, in some but not necessarily all examples, communicate with each other.

The network 100 may be a cellular network comprising a plurality of cells 122 each served by an access node 120. The interfaces between the terminal nodes 110 and the access nodes 120 are wireless interfaces 124. The access nodes 120 are cellular radio transceivers. The terminal nodes 110 are cellular radio transceivers.

In the particular example illustrated, the network 100 is a Next Generation (or New Radio, NR) Radio Access network (NG-RAN). New Radio is the 3GPP name for 5G technology. The terminal nodes 110 are user equipment (UE).

In the present example, the access nodes 120 are gNodeBs (gNBs) 120, providing the user plane and control plane (RRC) protocol terminations towards the UE 110. The gNBs 120 are interconnected with each other by means of Xn interfaces 126. The gNBs 120 are also connected by means of N2 interfaces 128 to the Access and Mobility management Function (AMF) 130. The cellular network 100 could be configured to operate NR in licensed or unlicensed frequency bands.

The gNBs can be deployed in a NR standalone operation/scenario. The gNBs can be deployed in a non-standalone lone or dual connectivity scenario, not least for example such as:
Evolved Universal Terrestrial Radio Access - New Radio Dual Connectivity (EUTRA-NR-DC, also referred to as EN-DC)
New Radio - Evolved Universal Terrestrial Radio Access Dual Connectivity (NR-EUTRA-DC, also referred to as NE-DC), and/or
Next Generation Radio Access Network Evolved Universal Terrestrial Radio Access - New Radio Dual Connectivity (NG-RAN E-UTRA-NR Dual Connectivity, also referred to as NGEN-DC).

In such non-standalone/dual connectivity deployments, the gNBs 120 may be interconnected to base stations/NodeBs by means of X2 interfaces and connected to an Evolved Packet Core (EPC) by means of an S1 interfaces.

In examples where the cellular network 100 provides a third generation Partnership Project (3GPP) network, the terminal nodes 110 are UE and some of the access nodes 120 can be base stations (BS). In examples where the network 100 provides a Universal Terrestrial Radio Access network (UTRAN) or an Evolved Universal Terrestrial Radio Access network (E-UTRAN), such as a 3G or 4G network, some of the access nodes 120 can be UTRAN or E-UTRAN NodeBs, providing the UTRA or E-UTRA user plane and control plane (RRC) protocol terminations towards the UE 110. The NodeBs 120 are interconnected with each other and are also connected by means of the interface 128 to the Mobility Management Entity (MME) 130.

The access nodes 120 are network elements in the network responsible for radio transmission and reception in one or more cells 122 to or from the terminal nodes 110. Such access nodes may also be referred to as a transmission reception points (TRP's) or base stations. The access nodes 120 are the network termination of a radio link.

The terminal nodes 110 are devices that terminate the user side of the radio link. They are devices allowing access to network services. The terminal nodes 110 may be mobile terminals. The terminal nodes 110 may be user equipment or mobile stations. The term 'user equipment' is used to designate mobile equipment comprising a smart card for authentication/encryption etc such as a subscriber identity module (SIM).

In the following description, an access node 120 will be referred to as a network node 120, and a terminal node 110 will be referred to as a UE 110.

Each of the network node 120 and UE 110 may comprise one or more antennas, antenna patches or antenna panels, each comprising an array of antenna elements serving as receivers and transmitters. A controller controls phase shifts and amplitudes of the radio frequency electrical signals applied to the antenna elements to generate a beamformed directional electromagnetic wave transmitted signal having a controlled direction/beam steering direction and a beam pattern (radiation pattern), thereby forming a transmission beam (e.g. a network node transmission beam for use with downlink transmission; and a UE transmission beam for use with uplink transmission). The transmission beam relates to a spatially directed transmission with power focussed in an aiming direction or beam steering/pointing angle, such an angle corresponding to a direction of a main lobe of the transmitted radiation pattern.

The controller may process the phase shifts and amplitudes of radio frequency electrical signals from the antenna elements (such radio frequency electrical signals corresponding to transduced electrical signals from received electromagnetic wave signals) to achieve a preferred beamforming direction for reception, thereby forming a reception beam (e.g. a UE reception beam for use with downlink reception, and a network node reception beam for use with uplink reception). The reception beam relates to spatially directed reception wherein reception sensitivity is maximal at an aiming direction or pointing angle.

Beamforming, to form directional links for radio communication, may be used to compensate for high path-losses due to poor radio frequency (RF) propagation, which may affect not least the high frequency transmissions that can be used with 5G NR networks, e.g. transmissions at Frequency Range 2 (FR2) i.e. in the region of 24 - 52 GHz (as compared to Frequency Range 1 (FR1)'s sub 6 Ghz range).

Transmission of signals from the UE 110 to the network node 120 is uplink (UL) transmission via an uplink (UL) beam. A UL beam may be considered to comprise a beam pair, namely a transmission beam (from the UE) and reception beam (of the network node). Such a directional transmitter-side beam and a corresponding aligned directional receiver side beam jointly provide a UL beam pair for UL transmission/reception and connectivity (i.e. an optimal radio communication link/channel within the constraints of power, bandwidth and signal quality). It is to be appreciated that the transmission and reception beams are not necessarily physically aligned towards each other/in direct line of sight, not least for example in situations where there is a rich-scattering environment.

In a 5G NR network, an UL beam/beam pair may be considered to relate to a beamformed directional link from a UE to a network node, such a directional link having a directional transmission beam for UL transmission (UE UL Tx beam), and a corresponding aligned directional reception beam for the UL transmission (network node UL Rx beam), such a transmission beam and reception beam for UL transmission thereby defining a UL beam pair, also referred to simply as UL beam.

Reception of signals at the UE 110 from the network node 120 is downlink (DL) reception via a DL beam. A DL beam may likewise be considered to comprise a beam pair, namely a transmission beam (from the network node) and reception beam (of the UE). Such a directional transmitter-side beam and a corresponding aligned directional receiver side beam jointly provide a DL beam pair for DL transmission/reception and connectivity (i.e. an optimal radio communication link/channel within the constraints of power, bandwidth and signal quality). In a 5G network, a DL beam/beam pair may be considered to relate to a beamformed directional link from a network node to a UE, such a directional link having a directional DL transmission beam (network node DL Tx beam), and a corresponding aligned directional reception beam of the DL transmission (UE DL Rx beam), such a transmission beam and reception beam of the DL transmission thereby defining a DL beam/DL beam pair.

A transmitter, e.g. a transmitting network node, may use beam sweeping (i.e. transmitting reference signals from each of its directional transmission beams) to enable a receiver, e.g. a UE, to determine an optimal transmission beam that provides optimal reception by the receiver. The receiver may itself use beam sweeping, e.g. of its directional reception beams, to enable a receiver to determine an optimal reception beam that provides optimal reception by the receiver. In such a manner, the receiver's reception beam may be duly aligned with the determined optimal transmission beam.

The UE is configured to monitor a downlink reception quality parameter, for example, Reference Signal Received Power (RSRP), of a downlink reference signal, such as Synchronization Signal Block (SSB) or Channel State Information Reference Signal (CSI-RS). The downlink reception quality parameter is dependent upon the path loss incurred by the reference signals after propagation over the air. The downlink reception quality parameter is further dependent upon downlink reception gain or loss, which may depend not least upon the number of antenna elements of the UE used for downlink reception and the beam steering angle. The UE can infer whether or not a candidate downlink beam having a particular beam steering angle is optimal or acceptable for use in DL communication based on the reception quality parameter for the candidate DL beam, i.e. if the RSRP is above a sensitivity limit (the sensitivity limit being defined as the lowest received power level at which the downlink can still be decoded at a given bit error rate).

Conventionally, beam alignment/management may be effected by a network node requesting the UE to perform Sounding Reference Signal (SRS) transmission with beam sweeping or beam repetition so UL beam management/alignment can be performed based on the UE's uplink transmission. However, such an operation may increase latency, cause significant system and signaling overhead, and also UE battery consumption.

Beam management, such as relating to the determination and alignment of a transmitter/receiver beam pair, may be simplified based on an assumption of DL/UL beam correspondence or beam reciprocity. For example, in time division duplexing (TDD), a channel reciprocity assumption may assume that the UL and DL channels are identical. Since UL and DL are assumed identical, the network node may determine and configure its reception beam for UL transmission from the UE based on the network node's optimal transmission beam for DL transmission to the UE (i.e. the DL reception beam reported by the UE as having the best measured DL reception quality parameter, for example, Reference Signal Received Power (RSRP)). When using beam correspondence/reciprocity, the phase shift configuration for the network node's antenna array used for its transmission beam for DL transmission can be (re-)used for a reception beam for UL reception, thereby simplifying beam management. Similarly, the UE may determine and configure its transmission beam for UL transmission to the network node based on an optimal reception beam for DL transmission from the network node.

Typically, in most instances, a transmission/reception beam pair for DL (i.e. a transmission/reception beam pair for communication in the DL direction) will be a suitable, i.e. valid, reception/transmission beam pair for UL (i.e. a reception/transmission beam pair for communication in the UL direction). In 3GPP this is referred to a DL/UL beam correspondence or beam reciprocity. In view of this, in order to provide fast beam alignment/management, a network node's selection of a reception beam for UL transmission from a UE may be based on the UE's reporting of an optimal DL beam and DL reports. For example, the network node's UL receive (Rx) beam may be determined based on the network node's DL transmission (Tx) beam that was used for DL transmission and which resulted in the best/optimal DL beam reported in the DL beam report. Typically, in a single DL beam report, the UE provides up to best N, where N could be up to 4, DL RS's (such DL RS's having a 1:1 association to their respective DL beam hence each DL RS characterises and defines its associated DL beam).

However, a UE may report a best/optimal DL beam which, whilst best/optimal for the receipt of DL transmission, if it were used for UL transmission could risk transmission from the UE at a transmission power that violates/exceeds Maximum Permissible Exposure limits, such as for high-power UL transmissions in the high frequency FR2 of 5G NR (such as is illustrated in FIG. 2 discussed below). For example, a UE's DL reception beam may be able to receive DL transmissions. However, were the UE's DL reception beam to be selected for use as a UL transmission beam, UL transmissions from such a UL transmission beam corresponding to/the reciprocal of the DL reception beam may violate Maximum Permissible Exposure limits

As used herein, the term "Maximum Permissible Exposure (MPE)" relates to acceptable levels of a user's exposure to electromagnetic radiation, e.g. maximum permitted values of parameters such as: electric field strength (V/m), magnetic field strength (A/m), power density (mW/cm²) and exposure time values (s), such maximum permitted parameter values being dependent on the frequency of the electromagnetic radiation. MPE defines limits of how much energy can be focused towards human soft tissue. MPE limits seek to protect users, such as users of UE, whose one or more body parts may be in close proximity to UE antenna whilst transmitting, from being exposed to potentially unsafe levels of electromagnetic radiation. MPE is a regulatory constraint/measure that user equipment are required to comply with. Regulatory bodies, not least such as the Federal Communications Commission (FCC) and International Commission on Non-Ionizing Radiation Protection (ICNIRP), impose MPE constraints on transmitters at various carrier frequencies. Such MPE constraints may be defined in terms of short-term temporal averaging of radiated power, medium-term temporal averaging of radiated power, local-spatial averaging of radiated power, and/or medium-spatial averaging of radiated power. Enforcing compliance with MPE constraints seeks to prevent hazardous operating conditions and/or reduce electromagnetic pollution/noise/interference, particularly for the mm wave/FR2 frequency range transmissions such as may be used in 5G NR. MPE limits can be beam dependent and dependent of a position of a user's body part (e.g. a hand, a face) with respect to a beam. The UE may have one or more specific sensors, radar or use some other proprietary technique to detect a human/user/body part in close vicinity.

FIG. 2 schematically illustrates a portion of a wireless communication network 100 comprising first and second network node's 120a and 120b and a UE 110.

In the example of FIG. 2, the UE has two antenna panels 110ap (shown, merely for the purposes of illustration and clarity, as being outside of the UE). It is to be appreciated that, in other examples, the UE may comprise other numbers of antenna panels, including just one antenna panel. Each antenna panel comprises an array of antenna elements that are configurable to provide beam forming and beam steering with regards to transmission and reception. A first antenna panel provides a plurality of Rx beams 110DLr 0 - 5 for receiving DL transmissions. A second antenna panel provides a plurality of Rx beams 110DLr 6 - 10 for receiving DL transmissions.

In order to effect beam management, each network node transmits a plurality of different Reference Signals (RS) via a plurality of transmit beams (Txb) 120DLt for DL transmission, thereby defining a set of candidate transmission DL beams (cTxDLb). There is a 1:1 correspondence between each RS and each transmission DL beam. Each transmitted RS is associated with and characterises a cTxDLb. Each cTxDLb may be defined by its associated RS, for example a cTxDLb can be identified as having a beam index based on the index of its associated RS or via a logical index associated to the RS. The UE receives one or more of the DL RS via the UE's reception beams 110DLr, thereby defining a set of UE candidate receive DL beams (cRxDLb) 0 - 10, each cRxDLb having its own beam index, e.g. based on the index of its associated RS or via a logical index associated to the RS.

The UE performs a measurement of the received DL RS and sends a measurement report of the same, such as a DL beam report. The DL beam report provides an indication of a measured DL reception quality parameter for each candidate DL beam, for example indicating measured Reference Signal Received Power (RSRP) of the RS for each particular candidate DL beam or for the N best candidate DL beams (i.e. the UE may measure each configured RS but report up to N best candidate DL beams). Following receipt of the DL beam report, a determination is made as to an optimal/best beam/beam pair for DL from the network node.

In the illustrated example of FIG. 2, with regards to the first network node 120a, based on the DL beam report from the UE, Txb 1 is reported to be the best DL beam for DL transmission from the first network node and Rxb 2 is determined to be the best beam of the UE for DL reception from the first network node. Hence, the UE's Rxb 2 is paired with the first network node's Txb 1 to form a DL beam/DL beam pair for DL transmission from the first network node.

Whereas, with regards to the second network node 120b, based on the DL beam report from the UE, Txb 1 is reported to be the best DL beam for DL transmission from the second network node and Rxb 9 is determined to be the best beam of the UE for DL reception from the second network node. Hence, the UE's Rxb 9 is paired with the second network node's Txb 1 to form a DL beam/DL beam pair for DL transmission from the second network node.

In order to provide fast beam alignment/management, one may make use of DL beam reports (i.e. RSRP measurements for each DL RS of each candidate DL beam) and beam correspondence and assume that the optimal beam pair for UL transmission is the corresponding/reciprocal of the optimal beam pair for DL transmission.

Making use of beam correspondence, one could assume that, with regards to UL transmission from the UE to the first network node, the optimal beam pair for UL transmission could be based on the optimal beam pair for DL transmission. In other words, under an assumption of beam correspondence, the optimal UL beam pair would correspond to the reciprocal of the optimal DL beam pair, i.e. the UE's beam 2 being used for transmitting for UL transmission and the first network node's beam 1 being used for receiving UL transmission.

With regards to the second network node, if one were to seek to make use of DL beam reports and beam correspondence and assume that the optimal beam pair for UL transmission is the corresponding/reciprocal of the optimal beam pair for DL transmission, this would give rise to a deemed optimal UL beam pair for the second network node comprising: UE's beam 9 being used for transmitting for UL transmission, and the second network node's beam 1 being used for receiving UL transmission.

However, in the illustrated example, due to a position and proximity of a body part of a user 240 (e.g. user's head) with respect to the UE (and hence its antenna panel and its directional beams 6 - 10); certain of the beams, namely 8 - 10, would not in fact be suitable/valid for UL transmission/communication. This is because the user's head would be in the path of UL transmissions via such beams. Accordingly, UL transmissions from such beams may exceed recommended safe levels of power transmission and violate MPE limits due to the relative position and proximity of the user's head with respect to such beams. Accordingly, as schematically illustrated in FIG. 2 (via the reduced beam lobe size for beams 8 - 10), beams 8-10 are subject to MPE reduction/constraints due to the proximity of the user's head thereto, i.e. the maximal safe transmission power levels for beams 8 - 10 is restricted (as compared to the unrestricted transmission power levels for beam 6 and 7 [and beams 0 - 5 for the other antenna panel]).

In the illustrated example, due to the position and proximity of the user's head with respect to the direction of the optimal beam pair for the second network node's DL transmission (i.e. the second network node's DL Tx beam 1 and the UE's DL Rx beam 9), were a UL beam pair for UL transmission to be based on such a DL beam pair (i.e. the UE's UL Tx beam 9 and the second network node's UL Rx beam 1) this may result in a UL transmission from the UE exceeding MPE limits. In other words, were the beam corresponding to UE's DL Rx beam 9 to be used for UL transmission, then such a UE UL Tx beam 9 may result in a UL transmission exceeding MPE limits.

Whilst conventional DL beam reports comprising RSRP measurements/metrics for each DL beam may provide good measures of downlink beam strength (which may be used in determining/managing respective UL beams using beam correspondence), such conventional DL beam reports do not take into account uplink restrictions such MPE constraints that may affect DL beam's suitability for using in UL transmission/communication.

Without limiting the scope of the invention as set out in the claims, a technical advantage/technical effect of various, but not necessarily all, examples of the present disclosure discussed below can be to provide enhanced beam management that may enable improved identification/selection of a beam for UL transmission via a process that may reduce signalling overhead, power consumption and latency (i.e. as compared to previous methods for beam management, selection and alignment), as well as improve user safety by taking into account and complying with MPE limits.

Reference will now be made in the following examples to an apparatus 110, 1200 comprising:
means 1201 for determining whether at least one transmission power parameter for uplink transmission to a network node 120 via at least one respective candidate uplink beam would violate a maximum permissible exposure limit, the at least one candidate uplink beam and the at least one transmission power parameter being based, at least in part, on at least one respective measured candidate downlink beam; and
means for transmitting to the network node at least one indication as to whether the at least one measured candidate downlink beam is suitable for use in uplink communication (i.e. uplink reception and/or transmission), the at least one indication being based at least in part on the determination.

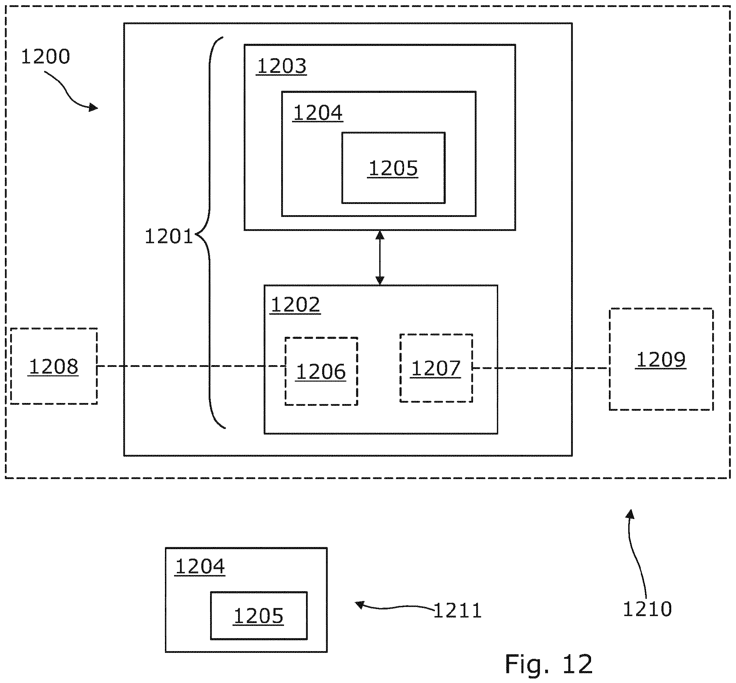

FIG. 3 schematically illustrates a flow chart of a method 300 according to an example of the present disclosure. The component blocks of FIG. 3 are functional and the functions described may or may not be performed by a single physical entity (such as a UE 110 and/or an apparatus as described with reference to FIG. 12 when duly configured to comprise means for performing the below method actions).

In block 301, a determination is made as to whether at least one transmission power parameter (Tx power) for uplink transmission (UL Tx) to a network node via at least one respective candidate uplink beam (cULb) would violate a maximum permissible exposure (MPE) limit. The at least one candidate uplink beam and the at least one transmission power parameter are both based, at least in part, on at least one respective measured candidate downlink beam (mcDLb).

In block 302, at least one indication as to whether the at least one measured candidate downlink beam is suitable for use in uplink communication (i.e. uplink reception and/or transmission) is transmitted to the network node, wherein the at least one indication is based at least in part on the determination of block 301.

In some but not necessarily all examples, the at least one indication as to whether the at least one measured candidate downlink beam is suitable for use in uplink communication, such as uplink reception, comprises at least one indication that the at least one measured candidate downlink beam is not suitable for use in uplink communication/reception. In some but not necessarily all examples, the at least one indication is configured to provide a notification that the at least one measured candidate downlink beam is not valid for use in uplink communication (UL reception and/or transmission), i.e. that the candidate uplink beam corresponding to the candidate downlink beam is not suitable for UL communication (i.e. UL transmission and/or reception).

In some but not necessarily all examples, the at least one indication comprises at least one indication of at least one selected from the group of:
at least one notification of at least one beam group index;
at least one notification of at least one set of downlink reference signals;
at least one notification of at least one antenna, such as panel of an array of antenna elements;
at least one candidate uplink beam disabling notification;
at least one notification of at least one downlink reference signal;
at least one notification of at least one beam index; and
at least one notification of at least one channel state information reference signal resource indicator.

Examples of the disclosure may enable the provision of an indication/report to the network node that indicates which candidate DL beams have a corresponding candidate UL beam (each candidate UL beam being in 'beam correspondence' with/the reciprocal to its respective candidate DL beam) that is suitable for UL communication, such as UL transmission, wherein such suitability is based on whether the candidate UL beam could provide UL transmission within MPE limits. Such an indication/report enables a determination of UL beams that should not be considered for UL transmission or that the UE would need large transmission power reduction if the UE were to be able to use that beam, i.e. thereby serving as a report of UL beams that are to be disabled. Such an indication/report may enable the network node to select a UL beam for UL transmission/reception, e.g. select a UL Tx beam for the UE for UL transmission and select a UL Rx beam for the network node for UL reception) and make appropriate scheduling decisions for the same. The selection of a UE's UL Tx beam may comprise making use of the phase shifts configuration that was used for the one or more antenna arrays of the UE's DL Rx beam for receiving one of the measured candidate DL beams indicated as being suitable for UL communication, such as UL transmission. Likewise, the selection of the network node's UL Rx beam may comprise making use of the phase shifts configuration that was used for the one or more antenna arrays of the network node's DL Tx beam for transmission of one of the measured candidate DL beams indicated as being suitable for UL communication, such as UL transmission. The indication enables a network node to determine UL Rx beams that ought to be disabled, i.e. phase shifts configurations for the one or more antenna arrays of the network node that ought not be considered or used for UL transmission. The indication can thereby assist the network node in determining beam selection and scheduling decisions.

Such an indication/report may thereby support beam management with reduced: signalling overhead, power consumption and latency (as compared to previous methods for beam management and UL beam selection), as well as improve user safety by taking into account and complying with MPE limits.

As used herein, the term "transmission power parameter" may be a power value for transmitted signals. It can, for example, be a required transmission power for UL transmission to the network node, e.g. a minimum UL transmission power required for adequate UL reception by the network node, i.e. such that the network node receives a UL transmission with acceptable reception quality parameters.

As used herein, the term "candidate uplink beam (cULb)" may be a potential UL beam that could be used for UL data transmission, i.e. as compared to a UL beam that has actually been selected and/or is currently serving/is in active use for UL data transmission. In various examples, the cULb is based, at least in part, on a measured candidate downlink beam (mcDLb). A mcDLb may be equated to a DL RS, received via a candidate DL beam (cDLb) transmitted from a network node, that is measured by the UE with different reception beamforming configurations. A cDLb may be equated to/characterized by/defined by its particular associated DL RS transmitted by the network node. The cDLb may be either a reported, configured and/or monitored DL beam. The UE may measure the RS and provide feedback on the same to the network node, e.g. via a DL beam report providing a report of the measurement of a reception quality parameter (such as Reference Signal Received Power - RSRP) of the received and measured reference signal.

The cULb may be determined based on a downlink (or uplink) reference signal. For a cULb determined based on a downlink reference signal, a UE may determine the respective/corresponding/reciprocal UL beam of a candidate DL beam. The cULb may correspond to using the DL RX beam used to receive the downlink reference signal as an uplink TX beam. Candidate UL beams may thereby be characterised and defined based on received and measured reference signals, based on which the UE may form its TX beam.

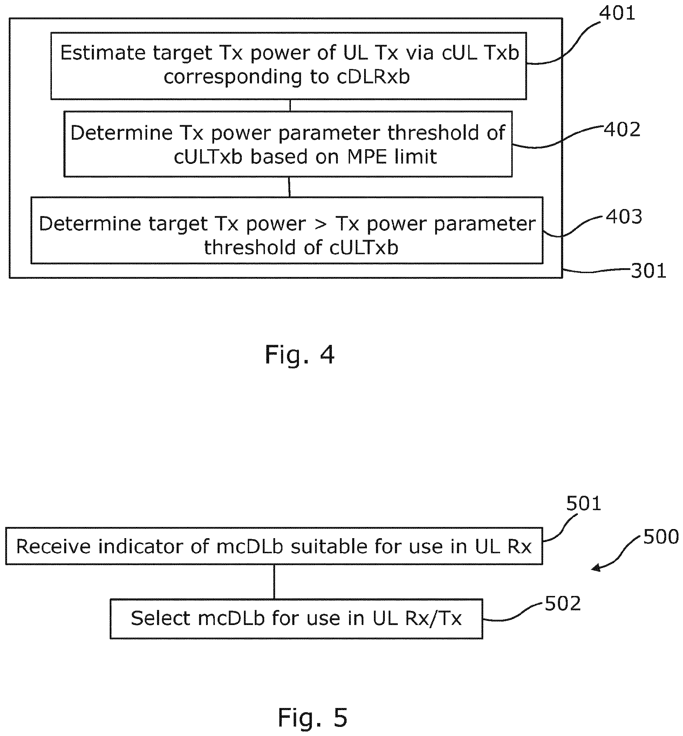

FIG. 4 schematically illustrates a flow chart of further details of the method block 301. The flowchart of FIG. 4 represents one possible scenario among others. The order of the blocks shown is not absolutely required, so in principle, the various blocks can be performed out of order. Not all the blocks are essential.

In block 401, a determination is made of the at least one transmission power parameter for uplink transmission to the network node via a candidate uplink transmission beam, wherein the candidate uplink transmission beam is one which is in correspondence with a candidate downlink reception beam of the at least one measured candidate downlink beam. Such a determination may comprise estimating a target transmission power for uplink transmission to the network node via a candidate uplink transmission beam, wherein the candidate uplink transmission beam is one which is in correspondence with a candidate downlink reception beam of the at least one measured candidate downlink beam. (i.e. the candidate uplink transmission beam is the reciprocal of a measured candidate downlink reception beam - hence the candidate uplink beam is based, at least in part, on the measured candidate downlink beam).

In some but not necessarily all examples, based on measurements of the received candidate downlink beam (i.e. determination of the RSRP measurements of the RS for each candidate DL beam), an indication as to path loss/attenuation for each DL beam may be determined. Such a determination of path loss for each DL beam for DL transmission may be used to estimate a corresponding path loss for each corresponding/reciprocal UL beam for UL transmission, based on which an estimated required transmission power for UL transmission via each such UL beam may be determined. Based on this, the at least one transmission power parameter for uplink transmission via at least one candidate uplink beam may be derived. Accordingly, in such a manner, the at least one transmission power parameter is based, at least in part, on the at least one respective measured candidate downlink beam.

In block 402, at least one transmission power parameter threshold is determined, wherein the at least one transmission power parameter threshold is for uplink transmission to the network node via the at least one candidate uplink transmission beam based on at least one MPE limit.

There may be a differing MPE limit for each candidate uplink transmission beam, e.g. due to differing relative positions of a user's body part with respect to each candidate uplink transmission beam (for example, a user's body part may not be in the way for certain candidate uplink transmission beams [e.g. beams 0 - 5 of FIG. 2]). Accordingly, there may be beam specific MPE limits and hence beam specific transmission power parameter thresholds.

The UE may be configured to determine MPE limits and beam specific transmission power parameter thresholds for one or more of the candidate UL beams (each of such one or more candidate UL beams being a corresponding UL beam for a candidate downlink beam of the one or more measured candidate downlink beam).

In some but not necessarily all examples, the UE may comprise means for determining a position of at least a part of a user's body with respect to the candidate uplink transmission beam, wherein the candidate uplink transmission beam corresponds to a candidate downlink reception beam of the at least one measured candidate downlink beam.

In some but not necessarily all examples, the UE may comprise means for detecting a distance of a user's body part (e.g., head or hand) from an antenna or an antenna array of the UE. The UE may comprise means for detecting a relative position of the user's body part with respect to the UE/antenna/antenna panel/antenna array and determine whether the body part would be in the path of a candidate UL beam. Based on such distance and positional information of the user's body part to the antenna/antenna array, and the direction of the candidate UL beam with respect to the UE/antenna/antenna panel/antenna array, as well as predetermined MPE values (e.g. MPE values that are based on recommendations/directive set by an appropriate regulatory body, which may be stored in a database local to the apparatus, or remotely accessible to the apparatus), the UE may determine a beam specific MPE limit/transmission power parameter threshold for each of the one or more of the candidate UL beams.

In block 403, a determination is made as to whether the determined target transmission power crosses the determined transmission power parameter threshold. This may be done for each candidate UL beam.

In some but not necessarily all examples, for each candidate UL beam, a determination is made as to whether its respective determined target transmission power is greater than the determined transmission power parameter threshold for the beam. In which case, a candidate UL beam is determined to be unsuitable for UL communication, such as UL transmission. For each of the candidate UL beams determined to be unsuitable for UL communication, such as UL transmission, a determination is made as to the measured candidate downlink beam which corresponds to/is the reciprocal of the unsuitable candidate UL beams. Such determined measured candidate downlink beams are then themselves determined to be unsuitable/invalid for use in uplink communication, i.e. UL reception and/or transmission. Based on such a determination of candidate downlink beams unsuitable/invalid for use in uplink communication (i.e. UL reception and/or transmission), an indication is generated for indicating that such measured candidate downlink beams are unsuitable/invalid for use in uplink communication (i.e. UL reception and/or transmission), or alternatively an indication is generated for indicating that other measured candidate downlink beams are suitable/valid for use in uplink communication (i.e. UL reception and/or transmission).

In some but not necessarily all examples, a first group of one or more candidate uplink beams may be determined that corresponds to a received first group of one or more measured candidate downlink beams. A first group of one or more transmission power parameter values may be determined for the one or more candidate uplink beams of the first set. A first group of one or more transmission power parameter thresholds for the one or more candidate uplink beams of the first set may be determined based on the maximum permissible exposure limit. A second group of one or more candidate uplink beams may be determined, the second group of candidate uplink beams comprising one or more candidate uplink beams whose transmission power parameter values are greater than their respective transmission power parameter thresholds. A second group of one or more measured candidate downlink beams may be determined corresponding to the one or more candidate uplink beams of the second group of candidate uplink beams. The at least one indication may comprise at least one indication as to whether the one or more measured candidate downlink beams of the second group of measured candidate downlink beams are not suitable for use in uplink communication, such as UL transmission and/or reception, or alternatively the at least one indication may comprise at least one indication as to whether one or more measured candidate downlink beams not part of the second group of measured candidate downlink beams are suitable for use in uplink communication.

In some but not necessarily all examples, at least one power difference between the at least one transmission power parameter and at least one transmission power parameter threshold may be determined, wherein the at least one transmission power parameter threshold is based on the maximum permissible exposure limit, and at least one signal indicative of at least one power difference may be transmitted from the UE to the network node.

In some but not necessarily all examples, at least one signal indicative of at least one transmission power reduction parameter for uplink transmission to the network node via the at least one respective candidate uplink beam may be received by the UE from the network node. The at least one transmission power parameter may be determined based at least in part on the at least one transmission power reduction parameter.

In some but not necessarily all examples, responsive to the transmitted at least one indication, a signal indicative of a selected at least one measured candidate downlink beam may be received. The downlink reception beam of the selected at least one measured candidate downlink beam may be used as an uplink transmit beam for uplink transmission.

In some but not necessarily all examples, at least one downlink beam report may be transmitted, e.g. from the UE to the network node. In some but not necessarily all examples, the at least one indication is comprised in the at least one downlink beam report. In some but not necessarily all examples, the at least one indication is transmitted separately to the transmission of the downlink beam report.

In some but not necessarily all examples, the at least one downlink beam report precludes reporting measured candidate downlink beams not comprised in the above-mentioned second group of one or more measured candidate downlink beams, i.e. the downlink beam report covers only those candidate DL beams that are both optimal for DL transmission as well as suitable for UL communication, such as UL transmission (i.e. UL transmissions via their corresponding UL beams would not violate MPE limits).

The above described examples and methods may be performed by an apparatus such as a UE 110 and/or the apparatus described in FIG. 12 duly configured to cause the performance of the above method actions, i.e. the apparatus described in FIG. 12 comprising means for performing the above method actions.

Whilst the disclosure of the subject matter of Figs 3 and 4, as well as the above described examples and methods, have been described from the perspective of the UE, it is to be appreciated that the above disclosure also provides a teaching of the subject matter from the perspective of the network node mutatis mutandis.

FIG. 5 schematically illustrates a flow chart of a method 500 according to an example of the present disclosure. The component blocks of FIG. 5 are functional and the functions described may or may not be performed by a single physical entity (such as a network node 120 and/or the apparatus described in FIG. 12 duly configured to cause the performance of the below method actions, i.e. the apparatus described in FIG. 12 comprising means for performing the below method actions.

In block 501, at least one indication as to whether at least one candidate downlink beam measured by a user equipment is suitable for use in uplink communication (such as UL transmission and/or reception) is received from the user equipment, wherein the indication is for indicating whether at least one transmission power parameter for uplink transmission from the user equipment via at least one respective candidate uplink beam would violate a maximum permissible exposure limit, the at least one candidate uplink beam and the at least one transmission power parameter being based, at least in part, on the at least one respective measured candidate downlink beam.

In some but not necessarily all examples, the at least one indication provides a notification that the at least one measured candidate downlink beam is not valid for use in uplink communication (i.e. UL reception and/or transmission), i.e. that the candidate uplink beam corresponding to the measured candidate downlink beam is not suitable for uplink communication (i.e. UL transmission and/or reception).

In block 502, a selection is made, based on the received indication, of a measured candidate downlink beam for use in uplink communication (i.e. UL reception and/or transmission), i.e. the selected beam is a beam selected from the at least one candidate downlink beam measured by a user equipment.

In some but not necessarily all examples, the network node selects one of the measured candidate downlink beams indicated as being suitable for use in UL communication, i.e. UL transmission and/or reception (or alternatively selects one of the measured candidate downlink beams not indicated as being unsuitable for use in UL communication, i.e. UL transmission and/or reception) and determines a UL beam corresponding to the selected measured candidate DL beam. In more detail, the network node may select a UL Tx beam for the UE for UL transmission and select a UL Rx beam for the network node for UL reception. The network node may then be able to make appropriate scheduling and allocation of resources decisions for the same. For example, the network node may appropriately schedule/allocate uplink resources for an uplink beam based on the received indication.

The selection of a UE's UL Tx beam may comprise making use of the phase shifts configuration that was used for the one or more antenna arrays of the UE's DL Rx beam for receiving one of the measured candidate DL beams indicated as being suitable for UL communication, such as UL transmission. Likewise, the selection of the network node's UL Rx beam may comprise making use of the phase shifts configuration that was used for the one or more antenna arrays of the network node's DL Tx beam for the transmission of one of the measured candidate DL beams indicated as being suitable for UL communication, i.e. UL reception.

In some examples, the method further comprises transmitting a plurality of candidate downlink beams, i.e. a plurality of RS for the same, which are measured by the UE. The method may further comprise receiving a DL beam report from the UE in respect of the measured DL beams. In some examples, the received at least one indication is received separately of the DL beam report. In other examples, the at least one indication is comprised in the DL beam report, i.e. the DL beam report is modified to include the at least one indication.

In some examples, the method further comprises receiving, after receipt of a first downlink beam report, a second downlink beam report. The method may further comprise performing a further selection of at least one candidate uplink beam based at least in part on the received at least one indication and the received at least one second downlink beam report.

In some examples, the method further comprises receiving, from a user equipment, at least one signal indicative of at least one power difference between the at least one transmission power parameter and the at least one transmission power parameter threshold, wherein the at least one transmission power parameter threshold is based on the maximum permissible exposure limit. The method further comprising selecting a measured candidate downlink beam for use in uplink communication based on the received power difference.

In some examples, the method further comprises transmitting at least one signal indicative of at least one transmission power reduction parameter for uplink transmission from the user equipment via the at least one respective candidate uplink beam.

The user equipment may use the received at least one transmission power reduction parameter to determine at least one transmission power parameter. The user equipment may use the at least one transmission power parameter in its determination as to whether the at least one transmission power parameter for uplink transmission to the network node via at least one respective candidate uplink beam would violate a maximum permissible exposure limit. The user equipment may transmit to the network node a signal indicative of a set of one or more measured candidate downlink beams for use in uplink communication.

In some examples, the method further comprises adjusting the at least one transmission power reduction parameter based at least in part on a number of measured candidate downlink beams in the at least one indication indicated as being suitable or unsuitable for use in uplink communication, such as UL reception.

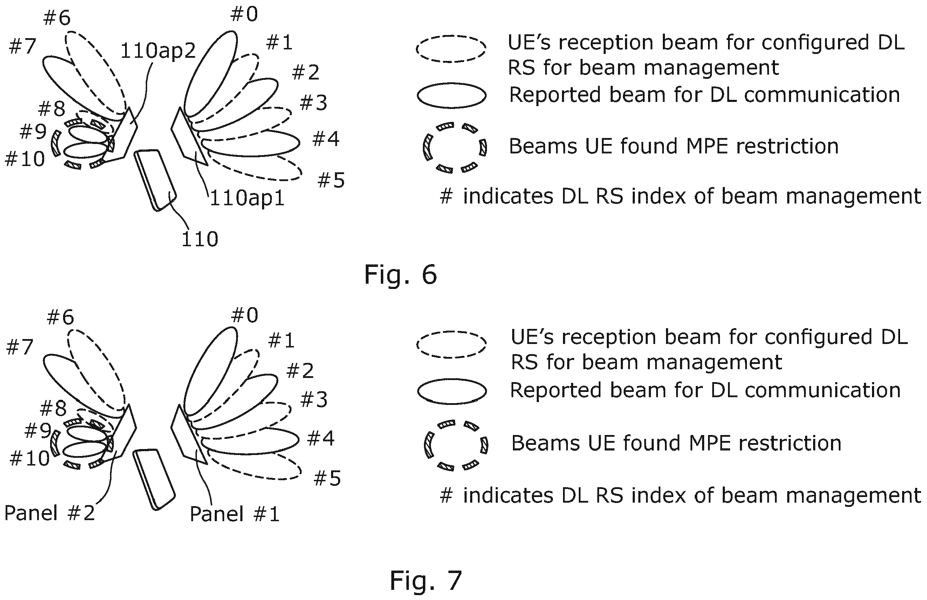

FIG. 6 schematically illustrates part of a network similar to that of FIG. 2. However, for the same of clarity, only the UE and its DL reception beams are shown (and neither the first and second network nodes nor the user's head is shown). As per the arrangement in FIG. 2, wherein particular ones of the UE's DL reception beams are determined to be unsuitable for UL communication, such as UL transmission due to violating MPE limits for such beams (i.e. in view of the UL Tx power for the UL beams corresponding to such particular DL beams and a proximity/position of the user's body (not shown) to such particular beams causing an MPE violation).

Each candidate DL beam comprises a reception beam of the UE for a configured DL RS for beam management. Each candidate DL beam is associated with, and characterised by its respective DL RS.

In the example of FIG. 6 (as well as FIGs 7, 8, 10 and 11), each of the 10 candidate DL reception beams 0 - 10 of the UE is assumed to be in a one-to-one relationship with a DL RS index (#0 - #10) associated with a corresponding candidate DL transmission beam of the network node. Accordingly, for these examples, each candidate DL reception beam of the UE can be identified by an associated DL RS index (#0 - #10) - plotted next to the DL reception beams as shown in FIG. 6.

However, it is to be appreciated that there need not necessarily be a one-to-one relationship between each candidate DL reception beam of the UE and a DL RS associated with a candidate DL transmission beam of the network node. For instance, a common DL reception beam of the UE may be used for receiving DL signals corresponding to two or more different DL transmission beams of the network node, and will be thus associated with two or more different DL RSs. Still, each candidate DL reception beam can be associated with one or more logical indexes associated with one or more DL RSs, such as one or more CRIs (CSI-RS (Channel State Information Reference Signal) Resource Indicators).

The first network node's DL RS, received via candidate DL beams (cDLb) #0 - #5 of the first antenna panel 110ap1, are measured (hence the cDLb's #0 - #5 are measured candidate DL beams (mcDLb)). A DL report of the mcDLb's received RSRP for the DL RS may be transmitted to the first network node (not shown).

In this example of FIG. 6, out of the mcDLb's #0 - #5, mcDLb's #0, #2 and #4 are reported as being optimal/acceptable for use in DL transmissions/communication with the first network node.

The second network node's DL RS, received via candidate DL beams (cDLb) #6-#10 of the second antenna panel 110ap2, are measured. A DL report of the mcDLb's received RSRP for the DL RS may be transmitted to the second network node (not shown).

In this example of FIG. 6, out of the mcDLb's #6 - #10, mcDLb's #7, #9 and #10 are reported as being optimal/acceptable for use in DL transmissions/communication with the second network node.

However, in this example, a user's body part (not shown) is proximal to and in the path of the beams #8, #9 and #10 (i.e. as per FIG. 2). Accordingly, out of the mcDLb's #7, #9 and #10 that are reported as being optimal for use in DL communication/transmission, following the performance of the determination block 301 (as discussed above with respect to FIGs. 3 and 4) it may be determined that certain of the mcDLb's, namely mcDLb's #9 and #10, are unsuitable for use in UL communication, such as UL transmission, since UL transmissions via their corresponding candidate UL beams would violate MPE limits.

Responsive to such a determination, at least one indication is transmitted indicating the suitability of at least one of the measured candidate DL beams. The indication may take the form of one or more indicators indicative of one or more of the reported mcDLb's that are suitable/valid for use in UL communication, such as UL transmission (in this case an indication of mcDLb #7). Additionally, or alternatively, the indication may take the form of one or more notifications indicative of one or more mcDLb's that are unsuitable/invalid for use in UL communication, such as UL transmission, e.g. an indication of mcDLb's #9 and #10.

It is be appreciated that a network node's DL Tx beams and the UE's DL Rx beams are not necessarily in one-to-one relationships. For example, in some instances, it is possible for two different DL Tx beams to be received by and correspond to the same UE DL Rx beam. If using a beam corresponding to such a UE DL Rx beam for UL transmission were to violate an MPE limit, then both of the two different DL Tx beams would be indicated as being not suitable for UL communication.

Indications indicative of measured candidate DL beams that are unsuitable for use in UL communication, such as UL transmission may be referred to as a "disabling notification".

In some examples, the indications are provided just for the DL beams of the DL beam report. In some examples, the UE reports a beam disabling notification to the network node to inform it that one/some of the reported DL beams or configured/monitored DL beams is/are not suitable to be used for UL communication.

The UE may report disabling notification together with beam index, such as is shown in the below table with regards to modified reports providing an enabled/disabled indication per reported beam:

| Legacy reports | Modified reports |
|---|---|
| CRI = 0 | CRI = 0, UL = on |
| CRI = 2 | CRI = 2, UL = off |
| CRI = 8 | CRI = 8, UL = off |

With regards to the above-mentioned example DL beam reports, CRI's: 0, 2 and 8 correspond to the candidate beams: #7, #9 and #10 respectively of FIG. 6 (wherein, in this example, the beams #9 and #10 are indicated as being unsuitable for UL communication/transmission).

The disabling notification can be reported together with DL beam reporting, or can be reported separately.

In the example of FIG. 6, the UE transmits a disabling notification indicating the candidate downlink beams (based on their CRI) associated with UE DL Rx beams 9 and 10 which are not suitable for use in uplink communication, and hence ought to be disabled for UL communication, i.e. thereby identifying beams not to be considered for UL communication.

In some but not necessarily all examples, the disabling notification is transmitted separately of the DL beam report. The DL beam report may indicate each of beams #7, #9 and #10 as being suitable candidates for use in DL communication, such as DL transmission. A disabling notification may be transmitted for each reported DL beam, i.e. for each of beams #7, #9 and #10. In this regard beams #9 and #10 may be reported as being disabled beams. In some examples, the indicator/disabling notification may be represented by a single bit or flag associated with a particular reported DL beam, such that the indicator/indication message is a one-bit indication.

In some but not necessarily all examples, the disabling notification is transmitted as a part of the DL beam report. For example, in a DL report reporting DL beams #9 and #10 as being good for DL transmission, the DL report many additionally indicate that DL beams #9 and #10 are not suitable for UL communication, such as UL transmission and/or reception. In some examples, the indicator/disabling notification may be embedded within the DL beam report, e.g. a new field in the DL beam report, to indicate to the network node that the reported downlink beam is unsuitable for uplink communication, such as UL transmission and/or reception. In some examples, the DL report comprises and additional field and/or conveys a bit for each reported DL beam which is toggled by the UE whenever the DL beam is unsuitable for uplink communication, such as UL transmission and/or reception.

In the example of FIG.6, the indication as to which mcDLb's are unsuitable for use in UL communication, such as UL transmission is effected by reference to the beam identifier/index of unsuitable mcDLb's, e.g. #9 and #10.

FIG. 7 illustrates an alternative example, wherein rather than identifying unsuitable mcDLb's by reference to their beam identifier/index, instead unsuitable mcDLb's are identified by reference to an antenna panel identifier/index of the antenna panel associated with the unsuitable beams. For example, when the MPE reduction effects just beams #9 and #10 of a single panel, e.g. the second panel, the UE may provide an indication as to unsuitable mcDLb's by reference to the antenna panel index, e.g. panel #2. If MPE reduction were required for UE antenna panel #2 only, then UE reports UE panel id #2 for its notification of UL beam group disabling.

Providing an indication of a panel identifier/index rather than specific individual beam identifiers/indexes may reduce signalling/bandwidth requirements. For example, with reference to FIG. 7, an indication of a single panel may be provided (panel index #2) as compared to providing indications for a plurality of beam indexes (beam indexes #9 and #10).

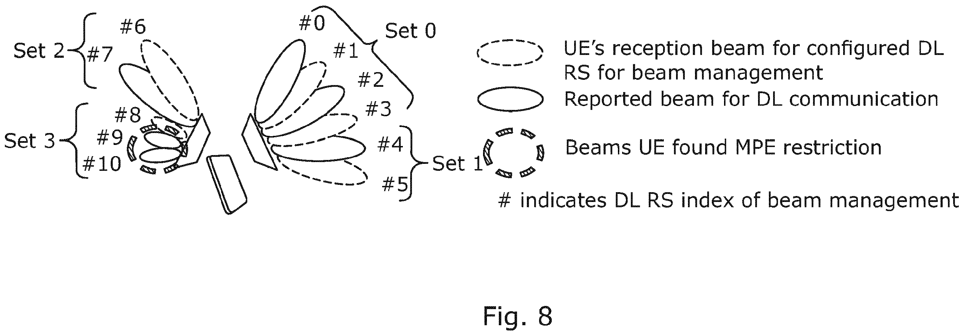

FIG. 8 illustrates a yet further alternative example, wherein the DL beams are grouped into beam group or DL RS sets, e.g. set 0 {beams #0 - #3}, set 1 {beams #4 - #5}, set 2 {beams #6 - #7}, and set 3 {beams #8 - #10}. Rather than identifying unsuitable mcDLb's by reference to their specific beam indexes or their associated panel index, instead unsuitable mcDLb's are identified by reference to their beam group identifier/index or DL RS set identifier/index. Each beam group and DL RS set may relate to, not least for example, a CSI-RS resource set. A DL RS set identifier/index may correspond to a CSI-RS resource indicator, which provides an index of the CSI-RS resource.

In some examples, the UE may measure DL beam quality based on DL beam management RS, and such RS can be configured as sets of RSs, e.g. CSI-RS resource set. Beam management RS's configured within the same set may have similar characteristics, so the set identifies can be an index of DL beam group. Accordingly, the UE may report an index of a configured DL beam RS set as a notification of disabled beam for UL.

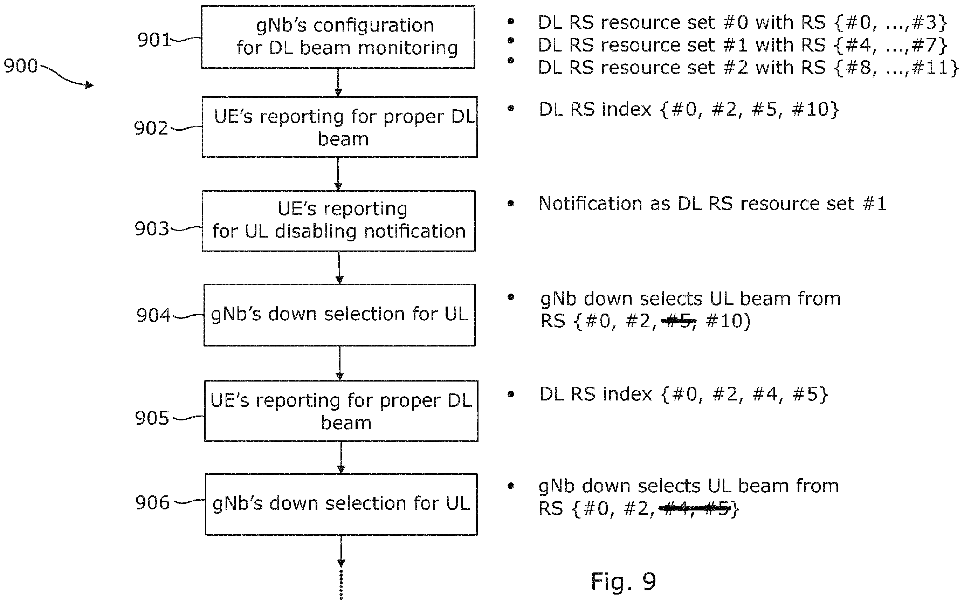

FIG. 9 schematically illustrates a flow chart of a method 900 according to an example of the present disclosure. In this method, the UL disabling notification is sent separately of the DL beam report. This thereby enables a separated & less frequent reporting of UL disabling notification, i.e. as compared to the frequency of DL beam reporting. In this example, the disabling notification is configured as an indication of DL RS set (i.e. as discussed above with respect to FIG. 8).

In block 901, a network node transmits a plurality of RS (#0 - #11) to the UE for DL beam monitoring. The RS's are grouped into DL RS resource sets:
DL RS resource set #0 with RS {#0 - #3}
DL RS resource set #1 with RS {#4 - #7}
DL RS resource set #2 with RS {#8 - #11}

In block 902, the UE provides a DL beam report indicating the DL beams having the best/acceptable reception quality parameters and hence which would be suitable for DL transmission/communication. In this example, such DL beams are those with DL RS indexes: #0, #2, #5 and #10.

In block 903, the UE provides UL disabling notification indicating the DL beams that are unsuitable for UL transmission/communication (i.e. due to MPE violation were the UL beams corresponding to such DL beams to be used for UL transmission/ communication). In this example, such DL beams are identified with reference to a DL RS resource set, namely DL RS resource set # 1, such a DL RS resource set corresponding to DL beams with DL RS indexes #4 - #7.

In block 904, the network node down selects a UL beam based on the both:
the DL beams indicated as being suitable for DL transmission/communication (i.e. #0, #2, #5 and #10), and
the DL beams indicated as being unsuitable for UL transmission/communication (i.e. #4 - #7)

In particular, the network node determines, based on the DL beam report and the beam disabling report, those DL beams that are both suitable for DL transmission/communication and which are not unsuitable for UL transmission/communication (i.e. it determines those DL beams that are suitable for both DL and UL transmission/communication), namely: #0, #2 and #10 (#5 being "disabled" disregarded from consideration by virtue of the disable notification). A UL beam, which corresponds to the correspondence/reciprocal of one of such identified DL beams is then selected for UL transmission/communication. The down-selected beam need not necessarily be the best DL beam.

In block 905, the UE provides a further/second DL beam report indicating a revised list of DL beams that are now suitable for DL transmission/communication. In this example, such DL beams now are those with DL RS indexes: #0, #2, #5 and #10.

In block 906, the network node down selects a new UL beam based on the both:
the DL beams indicated as being suitable for DL transmission/communication in the second DL beam report (i.e. #0, #2, #4 and #5), and
the DL beams previously indicated as being unsuitable for UL transmission/communication (i.e. #4 - #7)

Rather than requiring a new beam disabling notification to be issued for the new DL beam report, the network node can re-utilise the earlier disabling notification in it down selection.

In particular, the network node determines, based on the (new/second) DL beam report of block 905 and the (old/previous) beam disabling report of block 903, those DL beams that are suitable for both DL and UL transmission/communication, namely: #0 and #2 (#4 and #5 being "disabled"/disregarded from consideration by virtue of the disable notification). A UL beam, which corresponds to the correspondence/reciprocal of one of such identified DL beams is then selected for UL transmission/communication.

It is to be appreciated that since the disabling notification report is sent separately of the DL beam report, it can be sent less frequently. Since the positioning of a UE's body part with respect to the UE/antenna/panel would be the main reason UL beam unsuitability due to MPE violation (or as will be discussed below, the need for MPE reduction in the UL transmission power), the beams, beam sets, panels affected by the same would not frequently change, nor need to be reported as frequently as DL beam reports. Accordingly, the reporting overhead can be significantly reduced by separated reporting of disabling notification from DL beam reports and reporting the disabling notification less frequently than the DL beam reports.

In some examples, for the beams that are not disabled for UL, the UE may report beam specific PHR (Power Headroom Report) or P-MPR (Power Management Maximum Power Reduction) value to let the network node know required power back-off for each DL beam, if it were to be used for UL transmission, such as is shown in the below table:

| Legacy reports | Modified reports |
|---|---|
| CRI = 0 | CRI = 0, UL = on |
| CRI = 2 | CRI = 2, UL = off; P-MPR/PHR |
| CRI = 8 | CRI = 8, UL = off |

In some examples, the UE may provide a report to the network node information as to how much the UE would need to restrict its transmission power for each candidate uplink transmit beam in order to meet the MPE requirement (P-MPR case) or how much excess power it would need to be permitted to have per candidate uplink transmit beam (PHR case) to meet the MPE requirement.

For better beam management, the network node may configure a threshold power value which the UE may use in determining whether a DL beam is suitable for UL communication, such as UL transmission and hence whether is ought to be subject to a beam disabling notification. For example, if the network node set/configured a 5dB threshold for beam disabling, the UE may disable beams which needs P-MPR greater than or equal to 5dB (or alternatively, strictly greater than 5 dB).

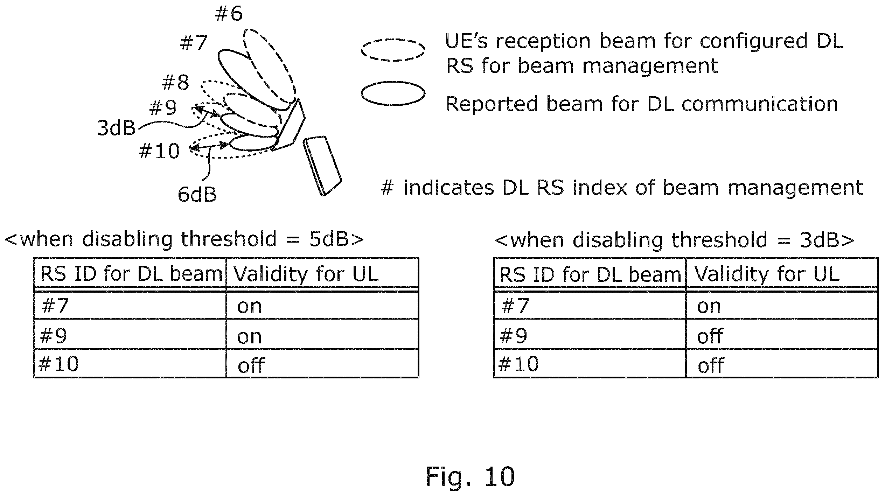

FIG.10 schematically illustrates a UE and its DL reception beams (neither of the network nodes nor the user's head are shown). As per the arrangement in FIG. 2, a user's head (not shown) is in the path of particular ones of the UE's DL reception beams, namely #8, #9 and #10. Similar to FIG. 6, out of the DL beams #6 - #10, DL beams #7, #9 and #10 are reported as being optimal/acceptable for use in DL transmissions/communication with a network node.

In this example, the UE's DL beam disabling report, i.e. the UE's determining of DL beams unsuitable for use in UL communication, such as UL transmissions, can be changed/dependent according to a power threshold configuration controlled by the network node.

As illustrated in FIG. 10, where the network node sets/configure a 3dB threshold for beam disabling and informs the UE of the same, for DL beam #9, which has a P-MPR of 3dB (i.e. equal to the 3dB threshold value), the beam may be considered invalid for use in UL transmission. Likewise, for DL beam #10, which has a P-MPR of 6dB (i.e. greater than the 3dB threshold value), the beam may be also be considered invalid for use in UL transmission.

By contrast, where the network node sets/configure a 5dB threshold for beam disabling and informs the UE of the same, for DL beam #9, which has a P-MPR of 3dB (i.e. less than the 5dB threshold value), the beam may be considered valid for use in UL transmission. Whereas, for DL beam #10, which has a P-MPR of 6dB (i.e. greater than the 5dB threshold value), the beam is still may be considered invalid for use in UL transmission.

In such a manner, the network node may be able to control the number of candidate beams available for UL transmission by raising or lowering the threshold whenever the number of possible candidate beams available for UL transmission get too low or to high respectively.

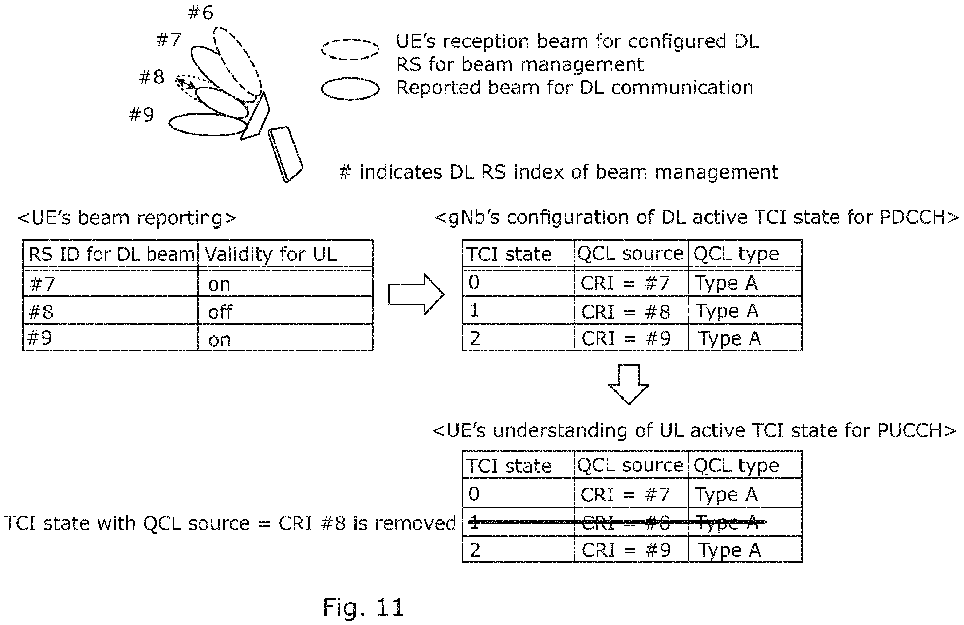

FIG.11 schematically illustrates an example of a UE and its DL reception beams (neither of the network nodes nor the user's head are shown). In this example, out of the mcDLb's #6-#9, mcDLb's #7, #8 and #9 are reported as being optimal/acceptable for use in DL transmissions/communication with a network node. An indicator/beam disabling notification indicates that mcDLb's #8 is unsuitable/invalid for use in UL transmissions/communication.

In this example the disabling information from the indication/disabling notification can be applied for Transmission Configuration Indicator (TCI) state configuration and activation, where common or overlapping TCI states exist for DL and UL. Since a TCI state comprises a reference signal, TCI states may represent candidate DL beams (similar to above discussed use of DL RS representing candidate DL beams).

In some examples, certain TCI states are deactivated of which reference signal would not be feasible for UL TX beam generation. Even when the active TCI states are separately configured for DL and UL, there will be common or overlapped (Quasi-collocation) QCL sources for DL active TCI states and UL active TCI states. Therefore, as a way of reducing Medium Access Control Control Element (MAC CE) activation signalling overhead:
a) the network node can configure a UL active TCI state as a subset of DL active TCI state, or
b) the network node may signal the UE to automatically down select UL active TCI state from DI active TCI states.

FIG. 11, shows an example of UE's determination/autonomous understanding of UL active TCI state where Physical Uplink Control Channel (PUCCH) active TCI states are extracted from Physical Downlink Control Channel (PDCCH) active TCI states and the UE's monitoring of disabled UL beam. The network node may activate a set of TCI states for DL based on UE's reporting of the best DL beams. Based on the network node's configuration of DL active TCI state and the UE's monitoring of disabled UL beams, the UE may assume that a subset of DL active TCI states, whose QCL source RS is not matched to a disabled UL beam, is configured as a UL active TCI state (e.g. in the example shown TCI states 0 and 2 associated with QCL source CRI's #7 and #9). Whereas, the UE may assume that a subset of DL active TCI states, whose QCL source RS is matched to a disabled UL beam, is removed from consideration as a UL active TCI state (e.g. in the example shown TCI state 1 associated with QCL source CRI's #8 is removed). The network node may configure to which DL channel/signal, each of UL channel/signal is associated.

Various, but not necessarily all, examples of the present disclosure can take the form of a method, an apparatus or a computer program. Accordingly, various, but not necessarily all, examples can be implemented in hardware, software or a combination of hardware and software.

Various, but not necessarily all, examples of the present disclosure are described using flowchart illustrations and schematic block diagrams. It will be understood that each block (of the flowchart illustrations and block diagrams), and combinations of blocks, can be implemented by computer program instructions of a computer program. These program instructions can be provided to one or more processor(s), processing circuitry or controller(s) such that the instructions which execute on the same create means for causing implementing the functions specified in the block or blocks, i.e. such that the method can be computer implemented. The computer program instructions can be executed by the processor(s) to cause a series of operational steps/actions to be performed by the processor(s) to produce a computer implemented process such that the instructions which execute on the processor(s) provide steps for implementing the functions specified in the block or blocks.

Accordingly, the blocks support: combinations of means for performing the specified functions; combinations of actions for performing the specified functions; and computer program instructions/algorithm for performing the specified functions. It will also be understood that each block, and combinations of blocks, can be implemented by special purpose hardware-based systems which perform the specified functions or actions, or combinations of special purpose hardware and computer program instructions.

FIG. 12 schematically illustrates an example of an apparatus 1200 which includes one or more components for effecting the above described methods. It is contemplated that the functions of these components can be combined in one or more components or performed by other components of equivalent functionality.

Where the apparatus 1200 is configured to perform the method described above with respect to FIGs. 3 and 4, the apparatus may be provided as a UE or a chip, chip set or module for use in the foregoing.

Where the apparatus 1200 is configured to perform the method described above with respect to FIG 5, the apparatus may be provided as a network element or a chip, chip set or module for use in the foregoing.

The apparatus 1200 comprises a controller 1201. The controller 1201 is configured to receive input signals/data/commands from an input/interface device 1208 and is configured to provide output signals/data/commands to an output device/interface 1209.

Implementation of the controller 1201 can be as controller circuitry. Implementation of the controller 1201 can be in hardware alone (for example processing circuitry comprising one or more processors and memory circuitry comprising one or more memory elements), have certain aspects in software including firmware alone or can be a combination of hardware and software (including firmware).

The controller can be implemented using instructions that enable hardware functionality, for example, by using executable computer program instructions in a general-purpose or special-purpose processor that can be stored on a computer readable storage medium (disk, memory etc.) or carried by a signal carrier to be performed by such a processor.

In the illustrated example, the apparatus 1200 comprises a controller 1201 which is provided by a processor 1202 and memory 1203. Although a single processor and a single memory are illustrated in other implementations there can be multiple processors and/or there can be multiple memories some or all of which can be integrated/removable and/or can provide permanent/semi-permanent/ dynamic/cached storage.

The memory 1203 stores a computer program 1204 comprising computer program instructions/code 1205 that control the operation of the apparatus when loaded into the processor 1202. The computer program instructions provide the logic and routines that enable the apparatus to perform the methods presently described.

In some but not necessarily all examples of the disclosure, the apparatus 1200 comprises:
at least one processor 1202; and
at least one memory 1203 including computer program instructions 1205 the at least one memory and the computer program instructions configured to, with the at least one processor, cause the apparatus at least to perform:
   determining whether at least one transmission power parameter for uplink transmission to a network node via at least one respective candidate uplink beam would violate a maximum permissible exposure limit, the at least one candidate uplink beam and the at least one transmission power parameter being based, at least in part, on at least one respective measured candidate downlink beam; and
   transmitting to the network node at least one indication as to whether the at least one measured candidate downlink beam is suitable for use in uplink communication, the at least one indication being based at least in part on the determination.

Such an apparatus may be embodied in a UE, or a chip, chipset or module for the foregoing.

In some but not necessarily all examples of the disclosure, the apparatus 1200 comprises:
at least one processor 1202; and
at least one memory 1203 including computer program instructions 1205 the at least one memory and the computer program instructions configured to, with the at least one processor, cause the apparatus at least to perform:
   receiving, from a user equipment, at least one indication as to whether at least one candidate downlink beam measured by the user equipment is suitable for use in uplink communication, wherein the indication is for indicating whether at least one transmission power parameter for uplink transmission from the user equipment via at least one respective candidate uplink beam would violate a maximum permissible exposure limit, the at least one candidate uplink beam and the at least one transmission power parameter being based, at least in part, on the at least one respective measured candidate downlink beam; and selecting, based on the received indication, a measured candidate downlink beam for use in uplink communication.

Such an apparatus may be embodied in a network node, or a chip, chipset or module for the foregoing.

According to some examples of the present disclosure, there is provided a system comprising the aforementioned UE and network node.

The computer program instructions 1205 are configured to cause the apparatus 1200 at least to perform one or more of the above described methods.

In some but not necessarily all examples of the disclosure, computer program instructions 1205 are configured to cause the apparatus 1200 at least to perform:
determining whether at least one transmission power parameter for uplink transmission to a network node via at least one respective candidate uplink beam would violate a maximum permissible exposure limit, the at least one candidate uplink beam and the at least one transmission power parameter being based, at least in part, on at least one respective measured candidate downlink beam; and
transmitting to the network node at least one indication as to whether the at least one measured candidate downlink beam is suitable for use in uplink communication, the at least one indication being based at least in part on the determination.

In some but not necessarily all examples of the disclosure, computer program instructions 1205 are configured to cause the apparatus 1200 at least to perform:
receiving, from a user equipment, at least one indication as to whether at least one candidate downlink beam measured by the user equipment is suitable for use in uplink communication, wherein the indication is for indicating whether at least one transmission power parameter for uplink transmission from the user equipment via at least one respective candidate uplink beam would violate a maximum permissible exposure limit, the at least one candidate uplink beam and the at least one transmission power parameter being based, at least in part, on the at least one respective measured candidate downlink beam; and selecting, based on the received indication, a measured candidate downlink beam for use in uplink communication.

The processor 1202 is configured to read from and write to the memory 1203. The processor 1202 can also comprise an input interface 1206 via which signal, data and/or commands are input to the processor 1202, and an output interface 07 via which signals, data and/or commands are output by the processor 1202.

The computer program can arrive at the apparatus 1200 via any suitable delivery mechanism 1211. The delivery mechanism 1211 can be, for example, a non-transitory computer-readable storage medium, a computer program product, a memory device, a record medium such as a compact disc read-only memory, or digital versatile disc, or an article of manufacture that tangibly embodies the computer program 1204. The delivery mechanism can be a signal configured to reliably transfer the computer program 1204.

The apparatus 1200 can receive, propagate or transmit the computer program 1204 as a computer data signal.

The apparatus 1200 can, for example, be a UE, a network node, a client device, server device, mobile cellular telephone, a base station in a mobile cellular telecommunication system, a wireless communications device, a hand-portable electronic device etc. The apparatus can be embodied by a computing device, not least such as those mentioned above. In some but not necessarily all examples, the apparatus can be embodied as a chip, chip set or module, i.e. for use in any of the foregoing.

Although examples of the apparatus have been described above in terms of comprising various components, it should be understood that the components can be embodied as or otherwise controlled by a corresponding controller or circuitry such as one or more processing elements or processors of the apparatus. In this regard, each of the components described above can be one or more of any device, means or circuitry embodied in hardware, software or a combination of hardware and software that is configured to perform the corresponding functions of the respective components as described above.

References to 'computer program', 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all of the following:
(a) hardware-only circuitry implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions and
(c) hardware circuit(s) and or processor(s), such as a microprocessor(s) or a portion of a microprocessor(s), that requires software (e.g. firmware) for operation, but the software may not be present when it is not needed for operation.
This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the particular claim element, a baseband integrated circuit for a mobile device or a similar integrated circuit in a server, a cellular network device, or other computing or network device.

In one example, the apparatus is embodied on a hand held portable electronic device, such as a mobile telephone, wearable computing device or personal digital assistant, that can additionally provide one or more audio/text/video communication functions (e.g. tele-communication, video-communication, and/or text transmission (Short Message Service (SMS)/ Multimedia Message Service (MMS)/emailing) functions), interactive/non-interactive viewing functions (e.g. web-browsing, navigation, TV/program viewing functions), music recording/playing functions (e.g. Moving Picture Experts Group-1 Audio Layer 3 (MP3) or other format and/or (frequency modulation/amplitude modulation) radio broadcast recording/playing), downloading/sending of data functions, image capture function (e.g. using a (e.g. in-built) digital camera), and gaming functions.

The apparatus can be provided in a module. As used here 'module' refers to a unit or apparatus that excludes certain parts/components that would be added by an end manufacturer or a user.

Various, but not necessarily all, examples of the present disclosure provide both a method and corresponding apparatus comprising various modules, means or circuitry that provide the functionality for performing/applying the actions of the method. The modules, means or circuitry can be implemented as hardware, or can be implemented as software or firmware to be performed by a computer processor. In the case of firmware or software, examples of the present disclosure can be provided as a computer program product including a computer readable storage structure embodying computer program instructions (i.e. the software or firmware) thereon for performing by the computer processor.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples the apparatus can be provided in a mobile terminal, other types of electronic devices, such as, but not limited to, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility.

The above described examples find application as enabling components of: automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The description of a function should additionally be considered to also disclose any means suitable for performing that function. Where a structural feature has been described, it can be replaced by means for performing one or more of the functions of the structural feature whether that function or those functions are explicitly or implicitly described.

Although specific terms are employed herein, they are used in a generic and descriptive sense only and not for purposes of limitation.

Features described in the preceding description can be used in combinations other than the combinations explicitly described.

Although functions have been described with reference to certain features, those functions can be performable by other features whether described or not.

Although features have been described with reference to certain examples, those features can also be present in other examples whether described or not. Accordingly, features described in relation to one example/aspect of the disclosure can include any or all of the features described in relation to another example/aspect of the disclosure, and vice versa, to the extent that they are not mutually inconsistent.

Although various examples of the present disclosure have been described in the preceding paragraphs, it should be appreciated that modifications to the examples given can be made without departing from the scope of the invention as set out in the claims.

The term 'comprise' is used in this document with an inclusive not an exclusive meaning. That is any reference to X comprising Y indicates that X can comprise only one Y or can comprise more than one Y. If it is intended to use 'comprise' with an exclusive meaning then it will be made clear in the context by referring to "comprising only one ..." or by using "consisting".

As used herein, the term "determining" (and grammatical variants thereof) can include, not least: calculating, computing, processing, deriving, investigating, looking up (e.g., looking up in a table, a database or another data structure), ascertaining and the like. Also, "determining" can include receiving (e.g., receiving information), accessing (e.g., accessing data in a memory), obtaining and the like. Also, "determining" can include resolving, selecting, choosing, establishing, and the like.

In this description, reference has been made to various examples. The description of features or functions in relation to an example indicates that those features or functions are present in that example. The use of the term 'example' or 'for example', 'can' or 'may' in the text denotes, whether explicitly stated or not, that such features or functions are present in at least the described example, whether described as an example or not, and that they can be, but are not necessarily, present in some or all other examples. Thus 'example', 'for example', 'can' or 'may' refers to a particular instance in a class of examples. A property of the instance can be a property of only that instance or a property of the class or a property of a sub-class of the class that includes some but not all of the instances in the class.

In this description, references to "a/an/the" [feature, element, component, means ...] are to be interpreted as "at least one" [feature, element, component, means ...] unless explicitly stated otherwise. That is any reference to X comprising a/the Y indicates that X can comprise only one Y or can comprise more than one Y unless the context clearly indicates the contrary. If it is intended to use 'a' or `the' with an exclusive meaning then it will be made clear in the context. In some circumstances the use of 'at least one' or `one or more' can be used to emphasise an inclusive meaning but the absence of these terms should not be taken to infer any exclusive meaning.

The presence of a feature (or combination of features) in a claim is a reference to that feature (or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present. In some but not necessarily all examples, exactly as described and is present in other examples substantially as described.

In the above description, the apparatus described can alternatively or in addition comprise an apparatus which in some other examples comprises a distributed system of apparatus, for example, a client/server apparatus system. In examples where an apparatus provided forms (or a method is implemented as) a distributed system, each apparatus forming a component and/or part of the system provides (or implements) one or more features which collectively implement an example of the present disclosure. In some but not necessarily all examples, an apparatus is re-configured by an entity other than its initial manufacturer to implement an example of the present disclosure by being provided with additional software, for example by a user downloading such software, which when executed causes the apparatus to implement an example of the present disclosure (such implementation being either entirely by the apparatus or as part of a system of apparatus as mentioned hereinabove).

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavouring in the foregoing specification to draw attention to those features of examples of the present disclosure believed to be of particular importance it should be understood that the applicant claims protection in respect of any patentable feature or combination of features hereinbefore referred to and/or shown in the drawings whether or not particular emphasis has been placed thereon.

The examples of the present disclosure and the accompanying claims can be suitably combined in any manner apparent to one of ordinary skill in the art.

Each and every claim is incorporated as further disclosure into the specification and the claims are embodiment(s) of the present invention. Further, while the claims herein are provided as comprising specific dependencies, it is contemplated that any claims can depend from any other claims and that to the extent that any alternative embodiments can result from combining, integrating, and/or omitting features of the various claims and/or changing dependencies of claims, any such alternative embodiments and their equivalents are also within the scope of the disclosure.

## Claims

1. An apparatus (110, 1200) comprising:
means (1201) for determining whether at least one transmission power parameter for uplink transmission to a network node (120) via at least one respective candidate uplink beam would violate a maximum permissible exposure limit, the at least one candidate uplink beam and the at least one transmission power parameter being based, at least in part, on at least one respective measured candidate downlink beam; and
means for transmitting to the network node (120) at least one indication as to whether the at least one measured candidate downlink beam is suitable for use in uplink communication, the at least one indication being based at least in part on the determination, wherein the at least one indication comprises at least one selected from the group of:
at least one notification of at least one beam group index;
at least one notification of at least one set of downlink reference signals; and
at least one notification of at least one antenna panel.

2. The apparatus (110, 1200) as claimed in claim 1, wherein the means (1201) for determining comprises means for estimating a target transmission power for uplink transmission to the network node (120) via a candidate uplink transmission beam corresponding to a candidate downlink reception beam of the at least one measured candidate downlink beam.

3. The apparatus (110, 1200) as claimed in claim 1, wherein the means (1201) for determining comprises means for determining a position of at least a part of a user's body with respect to a candidate uplink transmission beam, wherein the candidate uplink transmission beam corresponds to a candidate downlink reception beam of the at least one measured candidate downlink beam.

4. The apparatus (110, 1200) as claimed in claim 1, wherein the means (1201) for determining further comprises:
means for determining a first group of one or more candidate uplink beams corresponding to a received first group of one or more measured candidate downlink beams;
means for determining a first group of one or more transmission power parameter values for the one or more candidate uplink beams of the first set;
means for determining a first group of one or more transmission power parameter thresholds for the one or more candidate uplink beams of the first set based on the maximum permissible exposure limit;
means for determining a second group of one or more candidate uplink beams, the second group of candidate uplink beams comprising one or more candidate uplink beams whose transmission power parameter values are greater than their respective transmission power parameter thresholds;
means for determining a second group of one or more measured candidate downlink beams corresponding to the one or more candidate uplink beams of the second group of candidate uplink beams; and wherein
the at least one indication comprises at least one indication as to whether the one or more measured candidate downlink beams of the second group measured candidate downlink beams is not suitable for use in uplink transmission.

5. The apparatus (110, 1200) as claimed in claim 1, further comprising means (1201) for determining at least one power difference between the at least one transmission power parameter and at least one transmission power parameter threshold, wherein the at least one transmission power parameter threshold is based on the maximum permissible exposure limit; and
means for transmitting at least one signal indicative of the at least one power difference.

6. The apparatus (110, 1200) as claimed in claim 1, further comprising:
means for receiving at least one signal indicative of at least one transmission power reduction parameter for uplink transmission to the network node (120) via the at least one respective candidate uplink beam; and
means (1201) for determining the at least one transmission power parameter based at least in part on the at least one transmission power reduction parameter.

7. The apparatus (110, 1200) as claimed in claim 1, further comprising means for transmitting at least one downlink beam report; and optionally wherein the at least one indication is comprised in the at least one downlink beam report.

8. The apparatus (110, 1200) as claimed in claim 7 when dependent on claim 4, wherein the at least one downlink beam report precludes reporting measured candidate downlink beams not comprised in the second group of one or more measured candidate downlink beams.

9. The apparatus (110, 1200) as claimed claim 1, wherein the means for transmitting the at least one indication comprises means for transmitting the at least one indication separately to a transmission of a downlink beam report.

10. A user equipment, comprising the apparatus (110, 1200) as claimed in any previous claim.

11. An apparatus (120, 1200) comprising:
means for receiving, from a user equipment (110), at least one indication as to whether at least one candidate downlink beam measured by the user equipment (110) is suitable for use in uplink communication, wherein the indication is for indicating whether at least one transmission power parameter for uplink transmission from the user equipment (110) via at least one respective candidate uplink beam would violate a maximum permissible exposure limit, the at least one candidate uplink beam and the at least one transmission power parameter being based, at least in part, on the at least one respective measured candidate downlink beam, and wherein the at least one indication comprises at least one selected from the group of:
at least one notification of at least one beam group index,
at least one notification of at least one set of downlink reference signals, and
at least one notification of at least one antenna panel; and
means (1201) for selecting, based on the received indication, a measured candidate downlink beam for use in uplink communication.

12. The apparatus (120, 1200) of claim 11, further comprising:
means for receiving, from a user equipment (110), at least one signal indicative of at least one power difference between the at least one transmission power parameter and at least one transmission power parameter threshold, wherein the at least one transmission power parameter threshold is based on the maximum permissible exposure limit; and
wherein the selected measured candidate downlink beam for use in uplink communication is based on the received power difference.

13. The apparatus (120, 1200) of claim 11, further comprising:
means for transmitting at least one signal indicative of at least one transmission power reduction parameter for uplink transmission from the user equipment (110) via the at least one respective candidate uplink beam; and optionally means (1201) for adjusting the at least one transmission power reduction parameter based at least in part on a number of measured candidate downlink beams in the at least one indication indicated as being suitable for use in uplink communication.

14. A method comprising:
determining whether at least one transmission power parameter for uplink transmission to a network node (120) via at least one respective candidate uplink beam would violate a maximum permissible exposure limit, the at least one candidate uplink beam and the at least one transmission power parameter being based, at least in part, on at least one respective measured candidate downlink beam; and
transmitting to the network node (120) at least one indication as to whether the at least one measured candidate downlink beam is suitable for use in uplink communication, the at least one indication being based at least in part on the determination, wherein the at least one indication comprises at least one selected from the group of:
at least one notification of at least one beam group index;
at least one notification of at least one set of downlink reference signals; and
at least one notification of at least one antenna panel.

15. A method comprising:
receiving, from a user equipment (110), at least one indication as to whether at least one candidate downlink beam measured by the user equipment (110) is suitable for use in uplink communication, wherein the indication is for indicating whether at least one transmission power parameter for uplink transmission from the user equipment (110) via at least one respective candidate uplink beam would violate a maximum permissible exposure limit, the at least one candidate uplink beam and the at least one transmission power parameter being based, at least in part, on the at least one respective measured candidate downlink beam, and wherein the at least one indication comprises at least one selected from the group of:
at least one notification of at least one beam group index,
at least one notification of at least one set of downlink reference signals, and
at least one notification of at least one antenna panel; and
selecting, based on the received indication, a measured candidate downlink beam for use in uplink communication.
